# EUROPEAN PATENT SPECIFICATION

(11) **EP 1 872 664 B1**
(45) Date of publication and mention of the grant of the patent: **14.03.2012**
(21) Application number: 06745378.7
(22) Date of filing: 23.03.2006
(51) Int. Cl.: A23F 5/04, A23F 5/10, A23F 5/24

(54) **PROCESSES FOR TREATING ROASTED COFFEE BEANS WITH STEAM**
VERFAHREN ZUR BEHANDLUNG VON GERÖSTETEN KAFFEEBOHNEN MIT DAMPF
PROCEDE DE TRAITEMENT A LA VAPEUR DE GRAINS DE CAFE TORREFIES

(30) Priority: 25.03.2005 JP 2005088619
(43) Date of publication of application: 02.01.2008
(73) Proprietor: Suntory Holdings Limited, Kita-ku, Osaka-shi Osaka 530-8203 (JP)
(72) Inventor: TERAMOTO, Kenji, Osaka, 5640032 (JP); NAGAO, Koji, Yokohama-shi Kanagawa, 2210822 (JP); SHIBUYA, Katsushi, Kyoto, 6148117 (JP); YOKOO, Yoshiaki, Tokyo, 1830014 (JP)
(74) Representative: Harmsen, Dirk
(86) International application number: PCT/JP2006/305824
(87) International publication number: WO 2006/104009

(56) References cited:
- WO-A1-2005/011396
- JP-A- 06 046 755
- JP-A- 2004 049 086
- US-A- 3 615 665

## Description

The present invention relates to a technique for treating roasted coffee beans with steam by continuously supplying steam to the roasted beans under a flowing condition of the steam. More specifically, it relates to a technique of a steam treatment process for stably preparing treated beans by reducing variation in the degree of roasting between beans placed in different sites in an apparatus used for steam treatment.

A technique for reducing odorous components or acidity of roasted coffee beans by continuously supplying steam at high temperature and under high pressure is known (Patent Applications WO-A-2005/011396). This technique aims to remove odorous components or acidity and to improve the extraction rate by continuously supplying steam to roasted coffee beans placed in a vessel equipped with a steam inlet line and an outlet line. Bringing roasted coffee beans into contact with steam also has the purpose of advancing the degree of roasting of the beans. When steam is continuously supplied to roasted coffee beans placed in an apparatus, however, a temperature difference occurs between the steam inlet and outlet sites of the apparatus containing coffee beans to be roasted, resulting in a problem that the degree of roasting varies depending on proximity of the beans to the steam inlet or the outlet.

This problem is specifically explained in detail as follows. For example, at the initial stage during which steam is continuously supplied to the roasted coffee beans, when roasted coffee beans come into contact with steam, the steam is influenced by the temperature of the beans. Further, if the temperature of the beans is low, the steam transforms into water, and comes into contact with the roasted beans as condensed liquid, whereby the roasted beans near the outlet of the apparatus are continuously into contact with the condensed liquid. Thus, it is difficult to maintain a uniform flavor of roasted beans, because the beans near the steam outlet have a lower degree of roasting than that of roasted beans near the steam inlet, which causes a variation in flavor between roasted beans near the inlet and those near the outlet.

A possible solution to these problems is to preheat roasted beans before they are placed in the apparatus, but the number of steps increases and temperature management becomes complex, resulting in a complicated operation process. Another possible solution is to externally heat the beans accommodating apparatus, for which special equipment is required, leading to a higher cost.

An object of the present invention is to provide a steam treatment process for stably preparing steam-treated roasted coffee beans having a uniform flavor by reducing variation in the degree of roasting between beans in different sites in the apparatus during steam treatment of the roasted coffee beans, without complicating an operation process or increasing costs.

As a result of careful studies to solve the above problems, we initially found that, in processes employed for continuously supplying steam to roasted coffee beans, it is very important to maintain a constant temperature for a predetermined period to promote decomposing reactions of components in roasted coffee beans, thereby removing odorous components and reducing acidity components in the beans as well as improving the extraction rate, and it is also very important to keep roasted coffee beans at a constant temperature (i.e., with little variation) of about 160°C or more for a predetermined period (from one second to one hour) for the purpose of controlling the degree of roasting by steam.

Thus, in order to satisfy both of the above requirements, we further pursued our studies and found that a variation in the degree of roasting of coffee beans by steam treatment near the steam inlet and outlet sites can be reduced by starting with steam feed at a temperature (preferably about 150°C or less) lower than the temperature necessary to advance the degree of roasting of coffee beans (about 160°C or more), then continuously supplying steam at a temperature not exceeding 160°C (preferably 150°C) until almost all condensed liquid produced in the system has been discharged (herein referred to as "transition point"), and after the transition, rapidly supplying steam continuously to roasted coffee beans at a temperature necessary for advancing the degree of roasting.

A first characteristic feature of the steam supplying process of the present invention is to conduct steam treatment at a temperature of 160°C or more. In processes of continuously supplying steam to coffee beans, it is very important to maintain a constant temperature for a predetermined period for the purpose of removing odorous components and reducing acidity components in the beans as well as improving the extraction rate, and the degree of roasting by steam is remarkably improved especially by keeping the beans at a temperature of 160°C or more.

A second characteristic feature of the steam supplying process adopted in the present invention lies in that a transition point is defined as a period between (1) the step of discharging condensed liquid from the system by supplying steam and (2) the step of rapidly raising a temperature to a constant temperature of 160°C or more by supplying steam, and that, after the transition point at which essentially the total amount of condensed liquid has been discharged from the system, in step (2), the degree of roasting of coffee beans by steam at 160°C or more is made to advance homogeneously throughout the system.

Whether or not the transition point of condensed-liquid-discharge has been reached can be determined by detection or prediction or both. Methods for detecting and predicting the transition point will be described in detail later.

Steam-treatment of roasted coffee beans by the steam supplying processes of the present invention succeeded not only in removing odorous components and reducing acidity components in the beans as well as improving the extraction rate by efficiently discharging condensed liquid from the system without complicating an operation process or increasing costs, but also in acquiring uniform flavor with reduced variation in the degree of roasting. That is, full-bodied coffee drinks with low acidity and rich flavor, having consistent quality regardless of a site of roasting of the beans in an apparatus, can be provided.

The present invention will now be explained in detail below.

A process for treating roasted coffee beans with steam according to the present invention is characterized by comprising the steps of:
(1) continuously supplying steam into a beans accommodating portion of an apparatus at a temperature of 160°C or less for attaining a predetermined degree of roasting of coffee beans until the "transition point" at which essentially the total amount of condensed liquid produced by steam-supply is discharged from the apparatus; and
(2) subsequent to the above step, raising the temperature of steam supplied into the apparatus until a target temperature for advancing the degree of roasting of coffee beans (e.g., 160°C or more) is attained; and
(3) keeping continuous steam-supply at the target temperature for a predetermined period, wherein the target temperature is 160°C or higher.

Thus, the present invention aims not only to achieve the objects of steam treatment of removing odorous components and reducing acidity components in the beans as well as improving the extraction rate, but also to obtain steam-treated roasted coffee beans having constant flavor quality with reduced variation in the degree of roasting at any site in the system, by changing the steam supply mode before and after the transition point to treat roasted coffee beans with steam under optimal conditions.

### (1) Roasted coffee beans

As used herein, the term "roasted beans" to be treated with steam refers to coffee beans roasted by a commonly known method, i.e., ones obtained by roasting green coffee beans with heat. Generally, changes made by roasting are known as tissue shrinkage caused by gradual evaporation of aqueous components from heated cell walls of green beans, and therefore, color of beans turn into black after the beans have been roasted. The roasted beans for making coffee become suitable for drinking and have distinctive flavor and bitterness or acidity. Roasters, roasting methods and degrees of roasting for obtaining roasted coffee beans are not specifically limited, and conventional ones can be used. For example, conventional roasters (horizontal / lateral drum roasters) can be used; roasting methods based on heating means such as direct heating, heating by hot air, far infrared radiation, microwave, etc. can be used; and any degree of roasting such as light roasted, cinnamon roasted, medium roasted, high roasted, City roasted, Full City roasted, French roasted and Italian roasted according to U.S. style eight-stage naming can be used. In some cases, roasting can be performed only by steam treatment, and in such cases, the term "roasted coffee beans" as used herein also includes green coffee beans.

Roasted beans requiring reduced acidity are preferably used because acidity of roasted coffee beans can be reduced by steam treatment according to the processes of the present invention. Roasted beans requiring reduced acidity include, for example, beans having high degrees of roasting, roasted beans having improved extraction rates obtained by high-pressure treatment, and the like. Roasted beans having improved extraction rates often require improved acidity, and the present invention can be preferably used for even roasted beans having extraction rates of e.g., 20% or more. Thus, the technique of the present invention can be used in combination with various techniques for improving the extraction rate of coffee beans.

Specific varieties of coffee beans that can be used include COFFEA ARABICA, COFFEA CANEPHORA (Robusta), COFFEA LIBERICA, etc., and especially COFFEA ARABIXA and COFFEA CANEPHORA can be preferably used. In particular, the present invention can be preferably used for varieties with strong acidity. The present invention can also be preferably used for varieties with unpleasant odor such as e.g., COFFEA CANEPHORA, because the present invention can remove not only acidity but also unpleasant odors.

Roasted coffee beans are preferably whole-grain or coarsely ground ones in order to prevent efflux of soluble coffee solids by continuous steam treatment. Especially, substantially whole-grain (unground) roasted beans that are the most resistant to efflux of soluble coffee solids by continuous steam treatment can be preferably used, because acidity components of roasted beans are predominant near the surfaces of beans which have strongly influenced by roasting. However, ground beans (e.g., very coarsely ground beans) can also be used so far as efflux of soluble coffee solids by continuous steam treatment is permissible.

### (2) Detection or prediction of the transition point

According to the present invention, the temperature of steam supplied to the system before the transition point must be 160°C or less, preferably 150°C or less, more preferably about 130°C. After the transition point, the temperature of steam supplied is raised to a target temperature or more, and/or the rate of temperature rise is increased as compared with the rate before the transition point, and/or the flow rate is increased, to rapidly attain a target temperature in the system.

Whether or not the transition point has been reached can be determined by either one or both of two different means, i.e., detection and prediction.

### Detection of the transition point

As a means for detecting the transition point, we noted that the change in temperatures within the steam inlet and the outlet provided on the apparatus is similar, once condensed liquid in the apparatus has been discharged. Thus, steam is initially supplied to roasted coffee beans in the apparatus at a temperature (e.g., 150°C) lower than a target temperature for advancing the degree of roasting (e.g., 160°C), and continued at a temperature remaining at the initial level or gradually increased to a level not exceeding the target temperature, while the steam supply is feedback-controlled by using the steam outlet temperature as a controlled variable, so that the difference between the temperatures near the steam inlet and the outlet of the apparatus is brought within 10°C or less, preferably 5°C or less. Variables controlled here are not specifically limited, but the temperature, pressure and/or velocity of steam supplied to the system can be controlled by regulation of the degree to which the steam outlet valve or the steam inlet valve is opened.

Alternatively, since the condensed liquid finally runs off the apparatus in the direction of the steam even without performing the feedback operation described above, maintaining the steam supply at a temperature not exceeding the target temperature until a difference between the temperatures near the inlet and outlet sites becomes similar to the difference described above, can be another possible method of control. Control of the steam supply prior to the detection of the transition point can be performed by using any one of these control methods, or using a plurality of these methods concurrently or sequentially.

Then, the point when the above difference in temperatures is attained is detected as the transition point of condensed liquid-discharge, and a temperature is rapidly brought to a constant temperature of 160°C or more. This detection can be performed automatically or by an operator.

### Prediction of the transition point

On the other hand, a means for predicting the transition point comprises predicting the point at which steam supply at a temperature of 150°C or less has been maintained for a predetermined period as a transition point of condensed liquid discharge, i.e., a point at which essentially the total amount of condensed liquid has been discharged. After the transition point, the temperature is made to rapidly reach a constant temperature of 160°C or more. In this case, it is unnecessary to perform a feedback control using the outlet temperature; the transition point (the period for which a temperature of 150°C or less is held) is determined by trial and error. For example, the transition point can be predicted by preliminarily determining the period required for making the difference between the steam temperatures at the inlet and the outlet of the same apparatus within 10°C or less, preferably 5°C or less when the same amount of roasted coffee beans is placed in the apparatus and the steam at a temperature of 150°C or less is continuously supplied into the apparatus.

In either means of detection or prediction, there is no limitation on a method for measuring a temperature at each site, specific locations in the steam inlet and outlet sites to be measured, and the number of measurement sites.

### (3) Steam supply

The basic structure of supplying steam is explained as follows. Roasted coffee beans are placed in a bean accommodating portion equipped with a supply and a exhaust passages for steam. Then, steam is circulated from the supply passage to the exhaust passage in such a manner that steam is discharged from the steam exhaust passage at an outlet pressure which is higher than the atmospheric pressure.

In the present invention, to stably treat roasted coffee beans and to obtain high quality roasted coffee beans, the flux of steam and the environmental temperature/pressure during treatment are controlled before and after the transition point as follows. The environmental temperature/pressure can be controlled mainly by using the correlation between the temperature and pressure of steam supplied. Specifically, selecting/designing suitable line diameters, line materials and the number of passages for supplying steam to a process tank of any shape or material, and using a process tank equipped with a device capable of freely changing passages by using control valves or the like, enables steam to be supplied in a necessary flow rate while maintaining a constant pressure the inside of the flow passages and a process tank.

### Before the transition point

Steam supply before the transition point differs from supply after the transition point in that the supplying temperature does not exceed the target temperature for advancing the degree of roasting of coffee beans, but general conditions not particularly specified herein may be similar to those for supply after the transition point.

### After the transition point

In the present invention, acidity components can be efficiently removed by continuous steam treatment. This effect is mainly achieved by continuous steam feed after the transition point. Continuous steam feed at a target temperature is held for a predetermined period (one second to one hour). This is because sufficient roasting is not achieved within one second or less while the period should be within one hour to avoid excessive roasting. This period is appropriately selected depending on the intended degree of roasting and steam temperature. For example, if roasted beans having a degree of roasting (L-value) of 23 are to be brought to a degree of roasting of 19, steam supply should be kept at 190°C for about 4 minutes.

Apparatus and methods for supplying steam are not specifically limited so long as steam can be supplied substantially continuously. As used herein, the term "continuous steam supply" means that substantially continuous supplying of steam can be achieved; it includes the case of steam circulated intermittently or sequentially. For example, it may mean that the steam supply may be performed while exhaust valves are always open or exhaust valves are semicontinuously open, to allow steam to pass through roasted coffee beans.

The type of steam is not specifically limited in principle, and it includes saturated steam, overheated steam, oversaturated steam and the like. If an improvement in the extraction rate of roasted beans is expected, steam having a high degree of saturation that is highly effective for removing acidity, especially, saturated steam can be preferably used under conditions where acidity components occurs in roasted beans, since production of acidity components proceeds over time. An apparatus for generating steam is not specifically limited, and steam boilers, traditional Japanese iron pots and the like can be used. The water quality of steam is preferably pure steam generated from pure water, but is not specifically limited so far as it can be used to treat foods. In some cases, steam may be generated from water with appropriate amounts of alcohol or other liquid. Steam can be partially recycled to conserve energy so long as final products of roasted beans after treatment have an acceptable quality.

The direction of steam flow during continuous steam treatment of roasted coffee beans is not specifically limited, and steam can flow from top to bottom, from bottom to top, from outside to inside, from inside to outside, etc. with respect to roasted coffee beans. The flow rate of steam per unit time is not specifically limited so long as it is sufficient to remove acidity components, but preferably 0.1 to 100 kg/hour per kg of roasted coffee beans, for example.

For the purpose of removing acidity components or unpleasant odor, temperature of steam may be in principle sufficient to cause a steam flow. For the additional purpose of improving the extraction rate of roasted beans, temperatures of steam are desirably somewhat higher because insoluble components in coffee beans such as polysacaharides and fibers are required to be hydrolyzed into soluble components. Specifically, the temperature is preferably 160°C or more, more preferably about 165 to 230°C. The pressure here depends on the nature of steam, but it is about 0.7 to 3.0 MPa in the case of saturated steam. Under these temperatures, not only the above reaction but also the degree of roasting advances.

The type of apparatus for performing steam treatment is not specifically limited so long as continuous steam treatment can be maintained, and horizontal or vertical apparatus and treatment provided in batches or continuously can be used. When pressure vessels are used, exhaust valves are generally closed for a certain period once a predetermined pressure (or temperature) has been reached during steam treatment; but in the present invention, treatment is performed with exhaust valves being continuously or semicontinuously open as described above.

Exhausted steam is preferably condensed by a condenser or the like and recovered as an aqueous solution rather than being directly emitted, in view of the operating environment. Optionally, circulated steam may be recycled and used to treat roasted coffee beans again. Acidity components and unpleasant odor components of roasted coffee beans of COFFEA CANEPHORA are recovered in condensates.
(5) Steam-treated roasted coffee beans free from acidity components and having constant good flavor with reduced variation in the degree of roasting thus obtained by the steam treatment according to the present invention can be cooled and dried (under vacuum or by hot air or the like) and then conventionally stored in silos or immediately processed into instant coffee or liquid coffee extracts or the like.

Steam-treated roasted coffee beans in the present invention can be used as one of raw coffee materials for coffee drinks in combination with roasted coffee beans (regular coffee beans), instant coffee, liquid coffee extracts, etc. to conventionally prepare coffee drinks in coffee drink manufacturing methods. For example, canned coffee drinks can be manufactured via the steps of "grinding (regular coffee beans and roasted coffee beans)", "extracting", "blending", "filtrating", "filling", "seaming", "sterilizing", "cooling", and "packaging".

### (6) Apparatus

The present invention discloses a steam supplying process by which condensed liquid is essentially totally discharged from the system as a means for reducing variation in the degree of roasting of coffee beans during steam treatment between different sites in the steam circulating apparatus, especially between the steam inlet and outlet sites provided on the apparatus, specifically by using two means, i.e., detection and prediction of the transition point.

The apparatus of the present invention comprises a pressure vessel in which coffee beans are placed and steam treatment of the coffee beans is performed; a supply passage through which steam is supplied to the vessel; a exhaust passage through which steam is exhausted from the vessel; a valve for regulating the volume and/or velocity of supply of the steam; a valve for regulating the volume and/or velocity of exhaust of the steam; and a thermometer for measuring the temperature in the vessel at each of at least two sites near the inlet and the outlet sites of steam to/from the vessel.

The apparatus of the present invention also comprises a feedback mechanism for calculating the temperature difference between the inlet and outlet sites, and once the difference falls below a predetermined value, raising the temperature of steam supplied to the apparatus to increase any one of its pressure, flow rate and flow velocity.

The following examples further illustrate the present invention without, however, limiting the invention thereto.

### [Example 1] (Reference Example)

Steam was supplied to whole-grain roasted coffee beans at high temperature and high pressure to simultaneously perform a steam treatment and a hydrothermal reaction on the roasted coffee beans.

Thus, a pressure vessel withstanding a pressure up to 3.0 MPa having steam inlet line and outlet line was charged with 200 kg of roasted coffee beans (L = 24 (L is a common measure of chromaticity/brightness of solids and liquids; called L-value); COFFEA CANEPHORA) and fed with high-pressure steam (saturated steam) at 1.3 MPa (194°C) from the steam inlet at a flow rate of 100 kg/hour per kg of roasted coffee beans so that the roasted coffee beans were treated with steam at a pressure of 1.3 MPa (194°C) for 4 minutes to give roasted coffee beans, "control beans 1".

The temperatures near the steam inlet and outlet sites were measured to show that the inlet temperature reached the hold temperature 194°C within about 4 minutes after supply of steam was started. Thus, the temperature rise step required about 4 minutes, but the outlet temperature was still 140°C at that time. When the inlet temperature was 160°C in the course of reaching the hold temperature, the outlet temperature was 100°C. Such a difference between the temperatures at the inlet and outlet sites is presumed to result from condensed liquid built up near the outlet.

The above experiment was repeated to give "control beans 2".

### [Example 2]

Subsequently, a steam treatment using a steam supplying process of the present invention was performed. In this treatment, a steam supplying process based on detection was used. Specifically, this treatment was performed to give "treated beans 1", under the same conditions as those of Example 1 except that a steam supplying process included regulating a degree of openness of the steam outlet valve by using a steam outlet temperature as a controlled variable to perform feedback control so that the difference between the steam inlet and outlet temperatures came to 10°C or less before the steam inlet temperature reached 160°C or more, and after a transition point when the difference became 10°C or less, rapidly adjusting the pressure to 1.3 MPa (194°C).

The temperatures near the steam inlet and outlet sites were measured to show that the inlet temperature reached 150°C within about 2 minutes, at the time the outlet temperature was about 95°C. However, when the inlet temperature then reached 160°C, the outlet temperature rose to 152°C by feedback control, and then both the inlet and outlet temperatures rapidly reached the hold temperatures.

### [Example 3]

Subsequently, a steam treatment using a steam supplying process of the present invention was performed. In this treatment, a steam supplying process based on prediction was used. Specifically, this treatment was performed to give "treated beans 2", under the same conditions as those of Example 1 except that a steam supplying process required that the pressure within the apparatus be made to reach 0.5 MPa (155°C) within 3 minutes during the temperature rise step, and this instant was defined as a transition point at which essentially the total amount of condensed liquid has been discharged, and after that, the pressure was adjusted to 1.3 MPa (194°C) from 0.5 MPa within 2 minutes.

At the end of the treatment, the temperatures near the steam inlet and outlet sites were measured to show that the outlet temperature was about 156°C when the inlet temperature reached 160°C. It was further shown that the hold temperature 194°C was then reached while the difference between the temperatures at the inlet and outlet sites remained within 5°C.

### [Example 4]

The variation in the degree of roasting was evaluated in the steam-treated beans obtained in the above examples, i.e., control beans 1, control beans 2, treated beans 1 and treated beans 2. Specifically, the beans in each group were sampled from three sites, i.e., near the steam inlet, at a midpoint and near the outlet, and labeled as "inlet", "midpoint" and "outlet". The degree of roasting was evaluated by measuring the L-value, and variation in L-values at the different sites was determined.

The results are shown in Table 1.

**[Table 1]**

| Sampling site | Control beans 1 | Control beans 2 | Treated beans 1 | Treated beans 2 |
|---|---|---|---|---|
| "Inlet" | 19.3 | 19.0 | 18.7 | 19.0 |
| "Midpoint" | 19.9 | 19.3 | 19.1 | 19.2 |
| "Outlet" | 20.4 | 20.3 | 19.4 | 19.3 |
| Δ | 1.1 | 1.3 | 0.7 | 0.3 |

As shown in Table 1, the Δ values (the difference in the L-value between "inlet" and "outlet") of treated beans 1 and 2 were smaller than those of control beans 1 and 2. Thus, it can be said that the steam supplying processes of the present invention were found to be effective for reducing variation in the degree of roasting of steam-treated roasted coffee beans. It was also shown that the smaller the variation in the degree of roasting, the more constant the taste quality became.

The steam supplying processes of the present invention efficiently discharges condensed liquid from the system without complicating operation processes or increasing costs, to succeed not only in removing odorous components and reducing acidity components in the beans as well as improving the extraction rate, but also in acquiring very uniform flavor with reduced variation in the degree of roasting in the system.

## Claims

1. A process for treating roasted coffee beans with steam comprising the steps of:
(1) continuously supplying steam into an apparatus in which roasted coffee beans placed at a temperature of 160°C or less for attaining a predetermined degree of roasting until condensed liquid produced by the steam supply is discharged from the apparatus;
(2) then, raising the temperature of steam supplied to the apparatus until a target temperature is attained in the apparatus; and
(3) keeping continuous steam-supply at the target temperature for a predetermined period, wherein the target temperature is 160 °C or higher.

2. The process according to claim 1, wherein the temperature exceeding 160°C is kept for 1 second to 1 hour.

3. The process according to claim 1 or 2, wherein a temperature difference between at least two temperature measurement sites selected from the roasted coffee beans-accommodating apparatus, near the steam inlet of the apparatus and near the steam outlet of the apparatus, is calculated, and once the temperature difference has come within a predetermined range, the process proceeds from step (1) to (2).

4. The process according to claim 3, wherein the temperature measurement sites are near the steam inlet and near the steam outlet of the apparatus, and the process proceeds from step (1) to (2) when the temperature difference between the measurement sites falls within 10°C.

5. The process according to claim 3, wherein the temperature measurement sites are placed at the steam inlet and the steam outlet of the apparatus, and the process proceeds from step (1) to (2) when the temperature difference between the measurement sites falls within 5°C.

6. The process according to claim 4 or 5, wherein the steam feed is feedback-controlled by using the steam outlet temperature as a controlled variable in step (1).

7. The process according to claim 1 or 2, wherein the point when the process proceeds from step (1) to (2) is the point when condensed liquid is presumed to have been discharged depending on the particular condition under which step (1) is performed.

8. The process according to claim 7, wherein the supply of steam in step (1) is performed at 150°C or less.

9. The process according to claim 7 or 8, wherein the point when condensed liquid is presumed to have been discharged, is the point presumed by performing step (1) in an apparatus which is the same type as that used in the process, capable of measuring the steam temperatures at the inlet and outlet sites of the apparatus and in which the same amount of roasted coffee beans is placed, and determining the time required for the difference of the steam temperatures at the inlet and outlet sites to be 10°C or less, preferably 5°C or less.

10. The process according to any one of claims 1 to 9 further comprising the step of producing a coffee drink by use of the steam-treated, roasted coffee beans.

11. A batch of steam-treated roasted coffee beans obtained by the steam treatment process according to any one of claims 1 to 9.

12. A coffee drink made by use of the steam-treated, roasted coffee beans according to claim 11.

## Patentansprüche

1. Ein Verfahren zur Behandlung von gerösteten Kaffeebohnen mit Dampf, umfassend die Schritte:
(1) kontinuierliches Zuführen von Dampf in eine Vorrichtung in welche geröstete Kaffeebohnen bei einer Temperatur von 160°C oder weniger eingebracht werden, um einen vorbestimmten Grad an Röstung zu erhalten bis kondensierte Flüssigkeit, die durch die Zuführung von Dampf entsteht, aus der Vorrichtung abgeführt wird;
(2) dann, Erhöhen der Temperatur des Dampfes der in die Vorrichtung zugeführt wird, bis eine Zieltemperatur in der Vorrichtung erreicht wird; und
(3) Beibehalten einer kontinuierlichen Dampfzufuhr bei der Zieltemperatur für einen vorbestimmten Zeitraum, wobei die Zieltemperatur 160°C oder höher beträgt.

2. Das Verfahren gemäß Anspruch 1, wobei die 160°C übersteigende Temperatur für 1 Sekunde bis zu 1 Stunde beibehalten wird.

3. Das Verfahren gemäß Anspruch 1 oder 2, wobei ein Temperaturunterschied zwischen mindestens zwei Temperaturmessstellen, ausgewählt aus der Kaffeebohnenaufnahmevorrichtung, in der Nähe des Dampfeinlasses der Vorrichtung und in der Nähe des Dampfauslasses der Vorrichtung, berechnet wird, und sobald der Temperaturunterschied in einen vorbestimmten Bereich fällt, das Verfahren von Schritt (1) zu (2) fortschreitet.

4. Das Verfahren gemäß Anspruch 3, wobei die Temperaturmessstellen in der Nähe des Dampfeinlasses und in der Nähe des Dampfauslasses der Vorrichtung liegen, und das Verfahren von Schritt (1) zu (2) fortschreitet, wenn der Temperaturunterschied zwischen den Messstellen innerhalb 10°C liegt.

5. Das Verfahren gemäß Anspruch 3, wobei die Temperaturmessstellen an dem Dampfeinlass und dem Dampfauslass der Vorrichtung angebracht sind, und das Verfahren von Schritt (1) zu (2) fortschreitet, wenn der Temperaturunterschied zwischen den Messstellen innerhalb 5°C liegt.

6. Das Verfahren gemäß Anspruch 4 oder 5, wobei die Dampfzuführung durch die Verwendung der Dampfauslasstemperatur als Regelgröße in Schritt (1) geregelt ist.

7. Das Verfahren gemäß Anspruch 1 oder 2, wobei der Punkt, an dem das Verfahren von Schritt (1) zu (2) fortschreitet, der Punkt ist, an dem vermutet wird, dass kondensierte Flüssigkeit, abhängig von der jeweiligen Bedingung unter welcher Schritt (1) durchgeführt wird, abgeführt wurde.

8. Das Verfahren gemäß Anspruch 7, wobei die Dampfzufuhr in Schritt (1) bei 150°C oder weniger durchgeführt wird.

9. Das Verfahren gemäß Anspruch 7 oder 8, wobei der Punkt an dem vermutet wird, dass kondensierte Flüssigkeit abgeführt wurde, der vermutete Punkt ist, bei dem Schritt (1) in einer Vorrichtung welche vom gleichen Typ wie in dem Verfahren verwendet wird, durchgeführt wird, die dazu geeignet ist, die Dampftemperaturen am Einlass und Auslass der Vorrichtung zu messen und in welcher die gleiche Menge an gerösteten Kaffeebohnen eingebracht wird, und Bestimmen der Zeit, die benötigt wird, damit der Unterschied der Dampftemperaturen am Einlass und Auslass 10°C oder weniger, bevorzugt 5°C oder weniger, beträgt.

10. Das Verfahren gemäß einem der Ansprüche 1 bis 9, ferner umfassend den Schritt der Herstellung eines Kaffeegetränks durch Verwendung der dampfbehandelten, gerösteten Kaffeebohnen.

11. Eine Charge an dampfbehandelten, gerösteten Kaffeebohnen, erhalten durch das Dampfbehandlungsverfahren gemäß einem der Ansprüche 1 bis 9.

12. Ein Kaffeegetränk, hergestellt unter Verwendung der dampfbehandelten, gerösteten Kaffeebohnen gemäß Anspruch 11.

## Revendications

1. Processus de traitement de grains de café torréfié à la vapeur comprenant les étapes consistant à :
(1) approvisionner en continu avec de la vapeur un appareil dans lequel des grains de café torréfié sont placés à une température de 160 °C ou moins pour atteindre un degré prédéterminé de torréfaction jusqu'à ce que le liquide condensé produit par la fourniture de vapeur soit déchargé de l'appareil ;
(2) ensuite, élever la température de la vapeur fournie à l'appareil jusqu'à ce qu'une température cible soit atteinte dans l'appareil ; et
(3) maintenir l'approvisionnement continu en vapeur à la température cible pendant une période prédéterminée,
dans lequel la température cible est de 160 °C ou plus.

2. Processus selon la revendication 1, dans lequel la température dépassant 160 °C est maintenue pendant 1 seconde à 1 heure.

3. Processus selon la revendication 1 ou 2, dans lequel une différence de température entre au moins deux sites de mesure de température sélectionnés dans l'appareil contenant les grains de café torréfié, à proximité de l'entrée de vapeur de l'appareil et à proximité de la sortie de vapeur de l'appareil, est calculée, et une fois que la différence de température a rejoint une plage prédéterminée, le processus passe de l'étape (1) à l'étape (2).

4. Processus selon la revendication 3, dans lequel les sites de mesure de température sont proches de l'entrée de vapeur et proches de la sortie de vapeur de l'appareil, et le processus passe de l'étape (1) à l'étape (2) lorsque la différence de température entre les sites de mesure tombe dans les limites de 10°C.

5. Processus selon la revendication 3, dans lequel les sites de mesure de température sont placés au niveau de l'entrée de vapeur et au niveau de la sortie de vapeur de l'appareil, et le processus passe de l'étape (1) à l'étape (2) lorsque la différence de température entre les sites de mesure tombe dans les limites de 5°C.

6. Processus selon la revendication 4 ou 5, dans lequel la fourniture de vapeur est contrôlée par rétroaction en utilisant la température au niveau de la sortie de vapeur comme variable commandée à l'étape (1).

7. Processus selon la revendication 1 ou 2, dans lequel l'instant auquel le processus passe de l'étape (1) à l'étape (2) est l'instant auquel il est estimé que le liquide condensé a été déchargé compte tenu de la condition particulière dans laquelle l'étape (1) est effectuée.

8. Processus selon la revendication 7, dans lequel l'approvisionnement en vapeur à l'étape (1) est effectué à 150 °C ou moins.

9. Processus selon la revendication 7 ou 8, dans lequel l'instant auquel il est estimé que le liquide condensé a été déchargé est l'instant supposé tel qu'obtenu avec l'étape (1) dans un appareil qui est du même type que celui utilisé dans le processus, capable de mesurer les températures de vapeur aux sites d'entrée et de sortie de l'appareil et dans lequel la même quantité de grains de café torréfié est placée, et de déterminer le temps nécessaire pour que la différence des températures de vapeur aux sites d'entrée et de sortie soit de 10°C ou moins, de préférence de 5 °C ou moins.

10. Processus selon l'une quelconque des revendications 1 à 9, comprenant en outre l'étape consistant à produire une boisson à base de café en utilisant les grains de café torréfié traités à la vapeur.

11. Lot de grains de café torréfié traités à la vapeur obtenu par le processus de traitement à la vapeur selon l'une quelconque des revendications 1 à 9.

12. Boisson à base de café réalisée en utilisant les grains de café torréfié traités à la vapeur selon la revendication 11.
